(19) Europäisches Patentamt
European Patent Office
Office européen des brevets

(11) Publication number: 0 581 341 A1

# (12) EUROPEAN PATENT APPLICATION

(21) Application number: 93201448.3

(51) Int. Cl.[5]: C08G 63/688, C08G 63/20

(22) Date of filing: 21.05.93

(30) Priority: 22.05.92 IT MI921242

(43) Date of publication of application:
02.02.94 Bulletin 94/05

(84) Designated Contracting States:
AT BE CH DE DK ES FR GB GR IE IT LI LU MC NL PT SE

(71) Applicant: ENIRICERCHE S.p.A.
Corso Venezia 16
I-20121 Milan(IT)
Applicant: ENICHEM S.p.A.
Piazza della Repubblica, 16
I-20124 Milano(IT)

(72) Inventor: Po', Riccardo
Via Rosmini 20
I- 28100 Novara(IT)
Inventor: Pelosini, Luigi
Via A.Volta 10
I- 28010 Fontaneto D'Agogna (Novara)(IT)
Inventor: Gatti, Norberto
Via Turbigo, 28
I- 28067 Pernate (Novara(IT)
Inventor: Occhiello Ernesto
Corso Cavalloti, 13
I- 28100 Novara(IT)
Inventor: Garbassi, Fabio
Via C. Porta, 6
I- 28100 Novara(IT)

(74) Representative: Roggero, Sergio
Ing. Barzanò & Zanardo Milano S.p.A.
Via Borgonuovo 10
I-20121 Milano (IT)

## (54) Polyesters containing sulfonated comonomers as chain terminators.

(57) Slowly crystallizing polyesters containing sulfonated comonomers as chain terminators, obtained from the polycondensation of:
(a) at least one $C_2$-$C_4$ alkylene glycol;
(b) at least one dicarboxy $C_8$-$C_{16}$ aromatic acid;
(c) 0.001-10% by mol of a chain terminator selected from those having the general formulae:

EP 0 581 341 A1

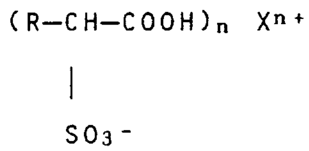

(I)

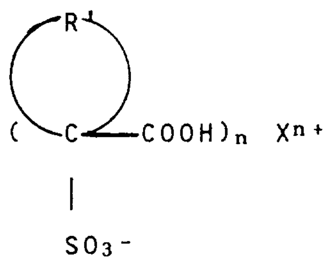

(II)

wherein R and R' represent a $C_1$-$C_{18}$ alkyl radical, X represents an alkali metal or an alkaline-earth metal and n is an integer with a value of 1 or 2;
(d) possibly a polyfunctional acid.

The present invention relates to polyesters containing sulfonated comonomers as chain terminators.

More particularly, the present invention relates to polyesters of terephthalic acid modified by means of the introduction of comonomers consisting of aliphatic carboxy acids in which the carbon atom in alpha-position is substituted with a salified sulfonic function.

Polyesters such as poly(ethylene terephthalates) modified with amounts comprised within the range of from 1 to 50% by mol of such monomers as dimethyl 2,6-naphtalene dicarboxylate, p-hydroxybenzoic acid, 4,4'-diphenyldicarboxy acid, trimellitic acid were developed in the past in order to reduce the crystallization kinetics of the relevant polymers.

In the injection moulding of bottle blanks of poly(ethylene terephthalate) (PET), one of the targets which one aims at reaching is of minimizing the crystallization of the sprue at the point at which the latter is connected with the blank, because in this way the impact strength of the end particle is improved. In order to obtain such a result, prolonged heating times during the blowing cycle and higher processing temperatures are adopted, with self-explanatory disadvantages as regards productivity on the one end and energy consumption on the other.

By limiting the crystallization rate of the material, by suitably modifying the polymeric chain at molecular level, the products can be moulded at lower temperatures and with shorter processing cycles, without thereby incuring the undesired phenomenon of crystallization.

Furthermore, a lower polymer moulding temperature results into means the possibility of supplying a lower heat amount to the material and hence of keeping the barrel of the extruder of the injection moulding machine at lower temperatures, with obvious energy savings.

A further advantage is connected with the lower development of aldehydes, such as acetaldehyde, during the processing. As well known, such a development is the higher, the higher the temperature the polymer is submitted to.

If the crystallization rate is low enough, blanks can be furthermore easily obtained with a higher thickness, suitable for producing bottles for sparkling beverages, without that said blanks crystallize and turn into cloudy.

The present Applicant has found now that polyesters resins can be prepared which are characterized by a low crystallization rate if, jointly with the traditional reactants, chain terminators are used which are selected from monocarboxy acids in which the carbon atom in the alpha-position is substituted with a salified sulfonic function.

Therefore, the subject matter of the present invention are polyester resins with a slow crystallization rate obtained from the polycondensation of:

(a) at least one diol essentially constituted by a $C_2$-$C_4$ alkylene glycol;

(b) at least one diacid essentially constituted by a dicarboxy $C_8$-$C_{16}$ aromatic acid, possibly substituted with halogens or $C_1$-$C_4$ alkyl radicals, or a derivative thereof;

(c) 0.001-10% by mol, based on the total content of acidic components, of a chain terminator constituted by a salt of a sulfonated monocarboxy acid selected from those having the general formula:

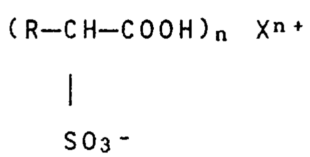

(I)

wherein R represents a $C_1$-$C_{18}$ alkyl radical, X represents an alkali metal or alkaline-earth metal and n is either 1 or 2;

or having the general formula:

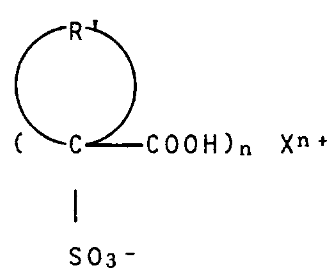

(II)

wherein R' represents a divalent $C_1$-$C_{18}$ alkyl radical, and X and n have the same meaning as mentioned above;

(d) optionally a polyfunctional acid, or a derivative thereof, selected, for example, from trimesic acid, trimellitic acid and pyromellitic acid.

Derivatives of the diacid of the step (b) or of the polyfunctional acid (d) essentially are their $C_1$-$C_4$ alkyl esters, acid halides or acid anhydrides.

Preferred polymers according to the present invention are those which are obtained in the presence of 0.1-4% by mol, based on the total content of acidic components, of chain terminator with general formula (I) or (II).

Examples of particularly suitable alkylene glycols for the present invention are ethylene glycol and butylene glycol. Such products may be used either alone or as mixtures with other diols, e.g., with 0-25% by mol of another diol, such as cyclohexane dimethanol.

Examples of dicarboxy aromatic acids are terephthalic acid, isophthalic acid, 2,6-naphtalene dicarboxy acid, and so forth. Also these products can be used either alone or as mixtured with other acids, e.g., with 0-25% by mol of another acid, such as hydroxybenzoic acid, succinic acid, adipic acid, and so forth. However, preferred dicarboxy acid is terephthalic acid.

Examples of chain terminators with general formula (I) are the sodium, lithium, potassium and calcium salts of cyclohexane carboxy acid, decaline carboxy acid, norbornane carboxy acid, acetic acid, propionic acid, and so forth, all of them being sulfonated. Such compounds can be obtained by sulfonating the suitable acid or anhydride and subsequently neutralizing the resulting sulfonated product with an alkali metal or alkaline-earth metal hydroxide.

Generally, the polyfunctional acid is added to the reaction system in amounts comprised within the range of from 0% to 10% by mol, relatively to the total content of acidic components. However, when present, the situation is preferred in which the percent content, by mol, of polyfunctional monomer, meets the following relationship:

$$PF \leqq TC/(gf-2)$$

wherein

TC = molar percent content of chain terminator;
PF = molar percent content of polyfunctional comonomer;
gf = number of functional groups of polyfunctional monomer.

The polyesters according to the present invention have an intrinsic viscosity, as measured in phenol/tetrachloroethane (in the ratio of 60:40 by weight) at 30 °C and at a concentration of 0.25 g/l, higher than 0.4 dl/g, generally comprised within the range of from 0.5 to 1.5 dl/g, and have mechanical properties which are not different from those displayed by the corresponding polyesters terminated according to conventional techniques.

Furthermore, said polyesters are suitable for being used in order to manufacture fabricated bodies, such as bottles, films, sheets, and so forth, which can be prepared according to the normal technologies of fabrication of thermoplastic polymers, such as, e.g., injection moulding, blow moulding or extrusion; they can be processed in order to be converted into films or fibres; can be used as matrices for composite materials based on inorganic fillers or fibres, and can be used in order to prepare blends with other polymers.

Furthermore, the presence of the salified sulfonic moiety introduces into the polyester resins according to the present invention a reactive site with cationic dyes, making it possible these materials to be used in the field of dyeable fibres.

A process for preparing the polyester resins according to the present invention comprises reacting:

i) at least one diol essentially constituted by a $C_2$-$C_4$ alkylene glycol;

ii) at least one diacid essentially constituted by a dicarboxy $C_8$-$C_{16}$ aromatic acid, possibly substituted with halogens or $C_1$-$C_4$ alkyl radicals, or a derivative thereof;

iii) 0.001-10% by mol, relatively to the total content of acidic components, of a chain terminator constituted by a salt of a sulfonated monocarboxy acid having general formula (I) or (II);

iv) optionally a polyfunctional acid, or a derivative thereof, selected, for example, from trimesic acid, trimellitic acid and pyromellitic acid.

More particularly, the process according to the present invention can be implemented according to as described in "Comprehensive Polymer Science", G.C. Eastmond, A. Ledwith, S. Russo, P. Singwalt Eds., Pergamon Press, Oxford 1989, vol. 5, page 275.

According to a typical synthesis procedure by starting from a diester of the dicarboxy acid, the reaction mixture, in a first step, is purged, is conditioned under an inert atmosphere (nitrogen) and is heated at 180 °C, temperature at which the alcohol developed during the ester interchange reaction distils off.

In a second step, the temperature is then gradually increased up to 280-290 °C and the pressure is decreased down to 0.1-0.2 Torr, so as to favour the polycondensation.

The reactions which take place during the first step are catalyzed by compounds of acidic character, for example protic acids, such as $H_2SO_4$, p-toluene sulfonic acid, and so forth, or Lewis' acids, such as zinc, manganese, cobalt, magnesium acetates, and so forth.

In the polycondensation step, the use of acidic oxides, such as those of antimony or germanium, or the transition metal alkoxides, such as $Ti(O\text{-}Pr^1)_4$, proved to be advantageous.

The addition of the chain terminator with general formula (I) or (II) is preferably carried out at the end of the transesterification step.

The polyesters according to the present invention display a lower brittleness than the corresponding copolyesters containing a non-sulfonated aromatic chain terminator, or without chain terminator moieties. The latter display furthermore higher crystallization temperatures, as well as higher melting temperatures.

In the following, some examples are reported for merely illustrative purposes which, therefore, should not be construed as being limitative of the purview of the same invention.

Example 1

This Example discloses the preparation of a polyester from dimethyl terephthalate, ethylene glycol, trimellitic anhydride and sodium 1-carboxycyclohexanesulfonate.

To a glass flask of 250 $cm^3$, 96.0 g (0.495 mol) of dimethyl terephthalate, 480 mg (2.5 mmol) of trimellitic anhydride, 575 mg (2.5 mmol) of sodium 1-carboxycyclohexanesulfonate, 68.0 g (1.10 mol) of ethylene glycol and 100 mg of manganese acetate tetrahydrate were charged under an inert atmosphere.

The reaction mixture was heated to 190 °C and was then kept at that temperature for approximately 90 minutes in order to distil methanol off, then the temperature was increased up to 240 °C and 45 mg of antimony trioxide, 250 mg of 3,5-di-tert-butyl-4-hydroxyanisole and 250 mg of triphenylphosphate were added.

The pressure was then gradually reduced down to 0.1 Torr, and the temperature was increased up to 290 °C, with these conditions being then kept for approximately 30 minutes. Throughout this time period, the excess of ethylene glycol was removed.

After bringing the reaction apparatus back to room temperature and up to atmospheric pressure with $N_2$, the obtained polymer, recovered and crushed, had an intrinsic viscosity of 0.63 dl/g, a crystallization temperature (Tcc) of 170 °C and a melting temperature (Tm) of 247 °C.

The measurements of intrinsic viscosity were carried out on solutions at a concentration of 0.25 $g/cm^3$ in 60:40 phenol/tetrachloroethane by weight at 30 °C.

As an index of the crystallization rate, the crystallization temperatures were measured during the cooling scanning (at the cooling rate of 10 °C/minute) in DSC charts. By means of the same analytical tecnique, also the melting temperatures of the polymers were measured.

Comparison Example 1

This Example discloses the preparation of a polyester similar to the one of Example 1, with the same molar percent contents of dimethyl terephthalate, ethylene glycol, trimellitic anhydride and methyl benzoate instead of sodium 1-carboxycyclohexanesulfonate.

To a glass flask of 500 $cm^3$, 154.0 g (0.792 mol) of dimethyl terephthalate, 768 mg (4.0 mmol) of trimellitic anhydride, 544 mg (4.0 mmol) of methyl benzoate, 110.0 g (1.76 mol) of ethylene glycol and 160 mg of manganese acetate tetrahydrate were charged under an inert atmosphere.

The reaction mixture was heated to 180 °C and was then kept at that temperature for approximately 90 minutes in order to distil methanol off, then the temperature was increased up to 240 °C and 100 mg of antimony trioxide, 240 mg of 3,5-di-tert-butyl-4-hydroxyanisole and 400 mg of triphenylphosphate were added.

The pressure was then gradually reduced down to 0.1 Torr, and the temperature was increased up to 290 °C, with these conditions being then kept for approximately 30 minutes. Throughout this time period, the excess of ethylene glycol was removed.

After bringing the reaction apparatus back to room temperature and up to atmospheric pressure with $N_2$, the obtained polymer, recovered and crushed, had an intrinsic viscosity of 0.51 dl/g, a Tcc of 203 °C

and a Tm of 251 ° C.

Comparison Example 2

This Example discloses the preparation of a polyester similar to the one of Example 1, with the same molar percent contents of dimethyl terephthalate, ethylene glycol, trimellitic anhydride and without sodium 1-carboxycyclohexanesulfonate.

To a glass flask of 500 $cm^3$, 135.1 g (0.696 mol) of dimethyl terephthalate, 673 mg (3.5 mmol) of trimellitic anhydride, 95.5 g (1.54 mol) of ethylene glycol and 140 mg of manganese acetate tetrahydrate were charged under an inert atmosphere.

The reaction mixture was heated to 190 ° C and was then kept at that temperature for approximately 90 minutes in order to distil methanol off, then the temperature was increased up to 240 ° C and 63 mg of antimony trioxide, 200 mg of 3,5-di-tert-butyl-4-hydroxyanisole and 350 mg of triphenylphosphate were added.

The pressure was then gradually reduced down to 0.1 Torr, and the temperature was increased up to 290 ° C, with these conditions being then kept for approximately 30 minutes. Throughout this time period, the excess of ethylene glycol was removed.

After bringing the reaction apparatus back to room temperature and up to atmospheric pressure with $N_2$, the obtained polymer, recovered and crushed, had an intrinsic viscosity of 0.95 dl/g, a Tcc of 198 ° C and a Tm of 257 ° C.

Example 2

This Example discloses the preparation of a polyester by starting from dimethyl terephthalate, ethylene glycol, trimethyl trimellitate and sodium 1-carboxycyclohexanesulfonate.

152.0 g (0.784 mol) of dimethyl terephthalate, 2.016 g (8.0 mmol) of trimethyl trimellitate, 110.0 g (1.76 mol) of ethylene glycol and 160 mg of manganese acetate tetrahydrate were charged to a glass flask of 500 $cm^3$ under an inert atmosphere.

The reaction mixture was heated to 180 ° C and was then kept at this temperature for approximately 90 minutes in order to distil methanol off, then the temperature was increased to 200 ° C and 1.840 g (8.0 mmol) of sodium 1-carboxycyclohexanesulfonate was added.

After increasing the temperature to 240 ° C, 100 mg of antimony trioxide, 240 mg of 3,5-di-tert-butyl-4-hydroxyanisole and 400 mg of triphenyl phosphate were added.

The pressure was then gradually reduced down to 0.1 Torr, and the temperature was allowed to increase up to 290 ° C, with these conditions being then kept for approximately 30 minutes. Throughout this time period, the excess of ethylene glycol was removed.

After bringing the reaction equipment back to room temperature and up to atmospheric pressure with $N_2$, the resulting polymer, recovered and crushed, had an intrinsic viscosity of 0.63 dl/g, a Tcc of 152 ° C and a Tm of 229 ° C.

Comparison Example 3

This Example discloses the preparation of a polyester similar to the one of Example 2, with the same molar percent contents of dimethyl terephthalate, ethylene glycol, trimethyl trimellitate and methyl benzoate instead of sodium 1-carboxycyclohexanesulfonate.

To a glass flask of 500 $cm^3$, 152.0 g (0.784 mol) of dimethyl terephthalate, 2.016 g (8.0 mmol) of trimethyl trimellitate, 1.088 g (8.0 mmol) of methyl benzoate, 110.0 g (1.76 mol) of ethylene glycol and 160 mg of manganese acetate tetrahydrate were charged under an inert atmosphere.

The reaction mixture was heated to 180 ° C and was then kept at that temperature for approximately 90 minutes in order to distil methanol off, then the temperature was increased up to 240 ° C and 100 mg of antimony trioxide, 240 mg of 3,5-di-tert-butyl-4-hydroxyanisole and 400 mg of triphenylphosphate were added.

The pressure was then gradually reduced down to 0.1 Torr, and the temperature was increased up to 290 ° C, with these conditions being then kept for approximately 30 minutes. Throughout this time period, the excess of ethylene glycol was removed.

After bringing the reaction apparatus back to room temperature and up to atmospheric pressure with $N_2$, the obtained polymer, recovered and crushed, had an intrinsic viscosity of 0.48 dl/g, a Tcc of 199 ° C and a Tm of 250 ° C.

Comparison Example 4

This Example discloses the preparation of a polyester similar to the one of Example 2, with the same molar percent contents of dimethyl terephthalate, ethylene glycol, trimellitic anhydride instead of trimethyl trimellitate and without sodium 1-carboxycyclohexanesulfonate.

To a glass flask of 500 $cm^3$, 134.4 g (0.693 mol) of dimethyl terephthalate, 1.34 g (7.0 mmol) of trimellitic anhydride, 95.5 g (1.54 mol) of ethylene glycol and 140 mg of manganese acetate tetrahydrate were charged under an inert atmosphere.

The reaction mixture was heated to 190 °C and was then kept at that temperature for approximately 90 minutes in order to distil methanol off, then the temperature was increased up to 240 °C and 63 mg of antimony trioxide, 200 mg of 3,5-di-tert-butyl-4-hydroxyanisole and 350 mg of triphenylphosphate were added.

The pressure was then gradually reduced down to 0.1 Torr, and the temperature was increased up to 290 °C, with these conditions being then kept for approximately 30 minutes. Throughout this time period, the excess of ethylene glycol was removed.

After bringing the reaction apparatus back to room temperature and up to atmospheric pressure with $N_2$, the obtained polymer, recovered and crushed, had an intrinsic viscosity of 0.92 dl/g, a Tcc of 180 °C and a Tm of 253 °C.

Example 3

This Example discloses the preparation of a polyester by starting from dimethyl terephthalate, ethylene glycol and sodium 1-carboxycyclohexanesulfonate.

96.0 g (0.495 mol) of dimethyl terephthalate, 68.0 g (1.10 mol) of ethylene glycol and 100 mg of manganese acetate tetrahydrate were charged to a glass flask of 250 $cm^3$, under an inert atmosphere.

The reaction mixture was heated up to 180 °C and was then kept at this temperature for approximately 90 minutes in order to distil methanol off; the temperature was then increased up to 200 °C and 1.150 g (5.0 mmol) of sodium 1-carboxycyclohexanesulfonate was added.

After increasing the temperature to 240 °C, 64 mg of antimony trioxide and 250 mg of triphenylphosphate was added.

The pressure was then gradually reduced down to 0.1 Torr, and the temperature was allowed to increase up to 290 °C; these conditions were then kept for approximately 30 minutes. Throughout this time period, the excess of ethylene glycol was removed.

After bringing the reaction apparatus back to room pressure and up to atmospheric pressure with $N_2$, the resulting polymer, recovered and crushed, had an intrinsic viscosity of 0.60 dl/g, a Tcc of 177 °C and a Tm of 248 °C.

**Claims**

**1.** Polyester resins with a slow crystallization rate obtained from the polycondensation of:

(a) at least one diol essentially constituted by a $C_2$-$C_4$ alkylene glycol;

(b) at least one diacid essentially constituted by a dicarboxy $C_8$-$C_{16}$ aromatic acid, possibly substituted with halogens or $C_1$-$C_4$ alkyl radicals, or a derivative thereof;

(c) 0.001-10% by mol, based on the total content of acidic components, of a chain terminator constituted by a salt of a sulfonated monocarboxy acid selected from those having the general formula:

$$(R-\underset{\underset{SO_3^-}{|}}{CH}-COOH)_n \ X^{n+} \qquad (I)$$

wherein R represents a $C_1$-$C_{18}$ alkyl radical, X represents an alkali metal or alkaline-earth metal and n is either 1 or 2;

or having the general formula:

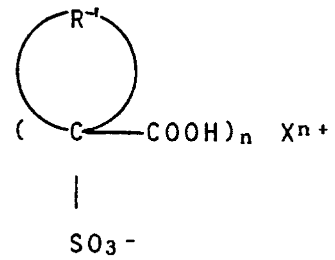

(II)

wherein R' represents a divalent $C_1$-$C_{18}$ alkyl radical, and X and n have the same meaning as mentioned above;
(d) optionally a polyfuncional acid, or a derivative thereof, selected, for example, from trimesic acid, trimellitic acid and pyromellitic acid.

**2.** Polyester resins according to claim 1, obtained in the presence of 0.1-4% by mol, based on the total content of acidic components, of chain terminator with general formula (I) or (II).

**3.** Polyester resins according to claim 1 or 2, in which the polyfunctional acid is added to the reaction system in amounts comprised within the range of from 0% to 10% by mol, relatively to the total content of acidic components.

**4.** Polyester resins according to claim 3, in which the percent content, by mol, of polyfunctional monomer, meets the following relationship:

$$PF \leq TC/(gf-2)$$

wherein
TC = molar percent content of chain terminator;
PF = molar percent content of polyfunctional comonomer;
gf = number of functional groups of polyfunctional monomer.

**5.** Polyester resins according to any of the preceding claims, having an intrinsic viscosity, as measured in phenol/tetrachloroethane (in the ratio of 60:40 by weight) at 30°C and at a concentration of 0.25 g/l, higher than 0.4 dl/g.

**6.** Use of the polyester resins according to any of the preceding claims in order to obtain fabricated bodies, bottles, films, sheets, plates, fibres.

**7.** Process for preparing the polyester resins according to the preceding claims, which comprises reacting:
i) at least one diol essentially constituted by a $C_1$-$C_4$ alkylene glycol;
ii) at least one diacid essentially constituted by a dicarboxy $C_8$-$C_{16}$ aromatic acid, possibly substituted with halogens or $C_1$-$C_4$ alkyl radicals, or a derivative thereof;
iii) 0.001-10% by mol, relatively to the total content of acidic components, of a chain terminator constituted by a salt of a sulfonated monocarboxy acid having general formula (I) or (II);
iv) optionally a polyfunctional acid, or a derivative thereof, selected, for example, from trimesic acid, trimellitic acid and pyromellitic acid.

European Patent Office

# EUROPEAN SEARCH REPORT

Application Number

EP 93 20 1448

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 657 193 (J.R. CALDWELL)<br>* abstract; example 2; claim 4, lines 36-66 *<br>--- | 1-3,6,7 | C 08 G 63/688<br>C 08 G 63/20 |
| A | US-A-4 579 936 (G.J. O'NEILL)<br>* claims 1-7; example 9 *<br>--- | 1,2,6,7 | |
| A | JOURNAL OF POLYMER SCIENCE PART B: POLYMER PHYSICS, vol. 30, no. 3, 15 March 1992, pages 281-292, New York, US; K.R. GORDA et al.: "Properties of Sulfonated Poly(Butylene Terephthalate)<br>* abstract *<br>--- | 1 | |
| A | DATABASE WPI, Derwent Publications Ltd., London, GB; DATABASE WPI, accession no. 83-52622k, week 22; & JP - A - 58067750 (UNITIKA KK)<br>* abstract *<br>--- | 1 | |
| P,A | EP-A-0 529 699 (ISTITUTO GUIDO DONEGANI S.P.A.)<br>* page 2, lines 1-54 *<br>----- | 1 | TECHNICAL FIELDS SEARCHED (Int. Cl.5)<br>C 08 G<br>C 08 K |

The present search report has been drawn up for all claims

| Place of search | Date of completion of the search | Examiner |
|---|---|---|
| BERLIN | 26-03-1993 | KRISCHE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)